# EUROPÄISCHE PATENTSCHRIFT

(11) **EP 1 954 485 B1**
(45) Veröffentlichungstag und Bekanntmachung des Hinweises auf die Patenterteilung: **27.07.2011**
(21) Anmeldenummer: 06818802.8
(22) Anmeldetag: 24.11.2006
(51) Int. Cl.: F01N 13/16

(54) **GEWEBELAMINAT ALS AUSKLEIDUNG ZUR SCHALLABSORPTION VON EIN- UND AUSLASSCHALLDÄMPFERN UND HERSTELLUNGSVERFAHREN EINER AKUSTISCHEN ISOLATIONSEINHEIT**
WOVEN LAMINATE AS A COVERING FOR SOUND ABSORPTION OF INPUT AND OUTPUT SOUND ABSORBERS AND METHOD FOR PRODUCING AN ACOUSTIC ISOLATION UNIT
STRATIFIE TISSE COMME REVETEMENT D'ABSORPTION ACOUSTIQUE POUR DES AMORTISSEURS DE BRUIT D'ENTREE ET DE SORTIE ET PROCEDE POUR REALISER UNE UNITE D'ISOLATION ACOUSTIQUE

(30) Priorität: 30.11.2005 DE 102005057024
(43) Veröffentlichungstag der Anmeldung: 13.08.2008
(73) Patentinhaber: Melicon GmbH, 41836 Hückelhoven (DE)
(72) Erfinder: MÜLLER, Ulrich, 41836 Hückelhoven (DE)
(74) Vertreter: Stenger, Watzke & Ring
(86) Internationale Anmeldenummer: PCT/EP2006/011283
(87) Internationale Veröffentlichungsnummer: WO 2007/062781

(56) Entgegenhaltungen:
- EP-A- 0 542 124
- EP-A1- 0 486 427
- US-A1- 2003 118 762

## Beschreibung

Die vorliegende Erfindung betrifft ein Gewebelaminat als Auskleidung für eine Schallabsorption von Ein- und Auslaßschalldämpfern in einer Hilfsgasturbine (APU) eines Luftfahrzeugs, insbesondere Flugzeugs. Die Erfindung betrifft des weiteren eine akustische Isolationseinheit mit einem derartigen Gewebelaminat sowie ein Verfahren zu deren Herstellung.

Gewebelaminate der eingangs genannten Art sind aus dem Stand der Technik bekannt. Für die Schallabsorption in heißen Gasströmungen werden so genannte mikroporöse Deckschichtmaterialien verwendet. Dies trifft insbesondere immer dann zu, wenn sich die zu absorbierenden Frequenzen im Bereich oberhalb von 800 Hz bis zu 6000 Hz befinden, wie sie in Turbinen oder anderen schnellaufenden rotatorischen Systemen auftreten, wie zum Beispiel in Hilfsgasturbinen (APU's) von Flugzeugen oder ähnlichem.

Die Funktionsweise der mikroporösen Materialien besteht darin, die Energie von Schalldruckwellen in thermische Energie umzuwandeln. Hierfür ist es notwendig, einen ganz bestimmten Druckverlust durch das mikroporöse Material zu bewirken. Die zum Teil hohen Temperaturen der Verbrennungsgase von Gasturbinen von bis 900° C erfordern einen entsprechenden Werkstoff auf metallischer oder keramischer Basis. Das breite Spektrum metallischer Werkstoffe bietet hierfür verschiedene Ansätze.

Eine der bekanntesten Lösungen ist die Verwendung von gesinterten Metallfaservliesen, wie sie auch zum Zwecke der Fest/Flüssig Filtration verwendet werden. Derartige Metallfaservliese werden in zylindrischer Form als Auskleidung in eine Schalldämpfersektion einer APU eingebaut. Ein wesentlicher Nachteil hierbei ist das hohe Gewicht dieser Vliese sowie auch deren Weiterverarbeitung durch Schweißen, die sich als äußerst schwierig darstellt. Ein weiterer Nachteil sind die langen Sinterzeiten, die zu hohen Kosten führen, und das spröde Verhalten des gesinterten Werkstoffs. Dies wird im wesentlichen durch den zu wählenden Werkstoff hervorgerufen, der immer auf Grund der hohen Temperaturen einen stark oxidbildenden Legierungszusatz beinhaltet. Ein typischer Werkstoff hierfür ist eine Legierung aus FeCrAlY. Ein Metallfaservlies mit schalldämpfenden Eigenschaften ist aus der DE 10 2004 018810 A1 bekannt.

Neuere Entwicklungen zielen deshalb auf die Substitution dieser Metallfaservliese durch Gewebe oder Gewebelaminate. Hierbei handelt es sich um ein- oder mehrlagige Drahtgewebe, die durch einen Sinterprozess zu festen Gewebelaminaten verbunden werden. Typischerweise wirkt dabei eine der Gewebelagen auf Grund der gewählten mikroporösen Maschenweite als akustisch aktive Lage.

Aus dem Stand der Technik sind ferner verstärkte Metallfasermatten bekannt, so zum Beispiel aus der DE 12 98 507 A. Die hier beschriebene Metallfasermatte besteht aus wahllos in einem verfilzten Körper verteilten einander überschneidenden, miteinander insbesondere durch Sintern verbundene Metallfasern, wobei die Besonderheit darin besteht, daß in mindestens einer Oberfläche der Metallfasermatte eine durchlässige mit größerem freiem Siebquerschnitt als die Matte versehene Metalleinlage eingebettet und metallurgisch verbunden ist. Die so ausgebildete Metallfasermatte dient insbesondere als Einsatz für Flüssigkeits-Filter.

Des weiteren ist aus dem deutschen Gebrauchsmuster 19 68 840 ein kombiniertes Band für Schalldämpfung, Filter- und Polsterzwecke bekannt geworden. Dieses Band besteht aus zwei oder mehr Arten von geeignetem vliesartigen Material oder Drahtgeflecht, wobei die innenliegende Kernzone aus Glas-, Mineral- oder Gesteinswolle und die Außenzone aus Stahlwolle und/oder Drahtgeflecht gebildet ist.

EP 0 542 124 A1 offenbart einen Schalldämpfer für Abgase eines Verbrennnungsmotors mit einem in einem Gehäuse angeordneten Schalldämmrohr durch dessen Umfangswand Abgas strömt. Das Schalldämmrohr ist aus versintertem Gewebe, Gestrick oder Gewirr von Metalldrähten, Metallfasern, Metallspänen, Metallpulver oder Mischungen daraus gebildet.

US 2003/0118762 A1 offenbart eine Schalldämmvorrichtung für eine Turbolader-Turbine. Eine Abgasleitung der Turbine ist mit einem schalldämpfenden Material versehen, welches einen Schichtaufbau aus Gewebeschichten aufweist. Umgeben ist das Dämpfungselement von einem Gehäuse aus Edelstahl.

EP 0 486 427 A1 offenbart einen entsorgbaren Hitzeschild mit einer schallabsorbierenden Wärmedämmschicht. Die Wärmedämmschicht weist einen Schutzbelag auf. Alle Schichten sind aus Aluminium oder einer Aluminiumlegierung gebildet. Die schallabsorbierende Wärmedämmschicht ist aus Aluminiumwolle gebildet.

Ausgehend von diesem Stand der Technik liegt der vorliegenden Erfindung die Aufgabe zugrunde, ein Gewebelaminat mit akustischen Dämpfungseigenschaften vorzusehen, das neben guten Verformungseigenschaften auch noch über eine ausreichende Beständigkeit gegenüber hohen Temperaturen zusammen mit einer hohen Korrosionsbeständigkeit in schwefelhaltigen heißen Gasen verfügt und gleichzeitig die mit einem Sinterprozeß verbundenen Nachteile ausschließt.

Diese Aufgabe wird durch ein Gewebelaminat mit den eingangs beschriebenen Merkmalen gelöst, das wenigstens drei übereinander geschichtete und wenigstens teilweise miteinander verschweißte Gewebelagen aufweist, von denen eine relativ zu den anderen eine grobe Struktur, eine andere eine feine Struktur und die verbleibende Gewebelage eine Struktur zwischen der groben und der feinen Struktur aufweist, wobei die Gewebelagen miteinander verwobene oder vliesartig verschlungene metallisch Drähte aufweisen.

Die Gewebelagen sind in der Schichtfolge fein-grob-mittel angeordnet. Es hat sich herausgestellt, daß ein derartiges Gewebelaminat hervorragende akustische Dämpfungseigenschaften besitzt, die denen von Laminaten des Standes der Technik entsprechen bzw. diese sogar übertreffen. Es hat sich des weiteren herausgestellt, daß das erfindungsgemäße Gewebelaminat richtungsabhängig hervorragende Biegeeigenschaften aufweist. So kann das Gewebelaminat deutlich stärker in Richtung der Gewebelage feiner Struktur verbogen werden, ohne daß es zu Ablösungen zwischen den einzelnen Gewebelagen kommt, als dieses bei bekannten Laminaten möglich ist. Das erfindungsgemäße Gewebelaminat eignet sich somit vortrefflich für Anwendungen als akustische Isolationseinheit beispielsweise zur Verkleidung von Antriebsaggregaten oder Teilen hiervon sowie zur Auskleidung von Motorräumen und besonders als akustisch wirksame Auskleidung von Schalldämpfern in APU's von Luftfahrzeugen wie Flugzeugen. Das Gewebelaminat kann entsprechend seiner Biegeeigenschaften an nahezu beliebige Formen und Biegeradien der akustisch zu isolierenden Elemente angepaßt werden. Insbesondere zeigt es auch ein sehr gutes thermisches Schweißverhalten.

Die Struktur der Gewebelagen im Sinne der vorliegenden Erfindung wird durch den Durchmesser der Drähte und/oder der zwischen den Drähten jeweils vorliegende Maschenweite bzw. Hohlraumgröße bestimmt. So kann beispielsweise die Gewebelage grober Struktur aus Drähten bestehen, deren Querschnitt größer ist als der der Drähte der verbleibenden Gewebelagen. In gleicher Weise besteht dann die Gewebelage feiner Struktur aus Drähten, deren Querschnitt kleiner ist als der der Drähte der verbleibenden Gewebelagen. Die Gewebelage mittlerer Struktur weist demnach Drähte auf, deren Querschnitt zwischen den zuvor genannten Drähten liegt. Ebenfalls kann die Struktur der Gewebelage durch die zwischen den miteinander verwobenen Drähten vorliegende Maschenweite bzw. Hohlraumgröße definiert sein. In diesem Fall besitzt die Gewebelage grober Struktur von den drei miteinander verbundenen Gewebelagen die größte Maschenweite bzw. Hohlraumgröße, während die Gewebelage feiner Struktur von den drei Gewebelagen die kleinste Maschenweite bzw. Hohlraumgröße besitzt. Die Maschenweite bzw. Hohlraumgröße der Gewebelage mittlerer Struktur liegt zwischen den Maschenweiten bzw. Hohlraumgrößen der beiden anderen Gewebelagen.

Nach einer vorteilhaften Ausführungsform der Erfindung weisen die Gewebelagen jeweils unterschiedliche Maschengrößen auf. Unter der Maschengröße in diesem Sinne ist der zwischen den die Gewebelage ausbildenden Drähten vorliegende Zwischenraum zu verstehen. Durch die Auswahl geeigneter Maschengrößen und eine dementsprechende Kombination sind die akustischen Eigenschaften des Gewebelaminats individuell einstellbar. Das erfindungsgemäße Gewebelaminat ist daher hervorragend auf unterschiedliche akustische Bedingungen bei unterschiedlichen Einsätzen abstimmbar.

Mit einer Ausführungsform der Erfindung wird vorgeschlagen, daß die Gewebelagen jeweils unterschiedliche Bindungen aufweisen. Unter der Bindung einer Gewebelage ist im Falle eines Gewebes das aus der Anordnung der Kett- und Schußdrähte zueinander entstehende Muster zu verstehen. Im Zusammenhang mit dem erfindungsgemäßen Gewebelaminat können sämtliche bekannte Bindungen verwendet werden. In Abhängigkeit von der verwendeten Bindung erhält jede Gewebelage individuelle Eigenschaften, wie beispielsweise Schiebefestigkeit, Oberflächenstruktur, richtungsabhängige Dehnbarkeit, etc. Durch eine Kombination von Gewebelagen mit unterschiedlicher Bindung können so ebenfalls die Eigenschaften des Gewebelaminates individuell richtungsabhängig eingestellt werden. Dies ermöglicht es, auch eine möglichst kleine Maschengröße mit möglichst dicken Drähten zu realisieren, was für eine ausreichende Beständigkeit gegenüber einer Heißgaskorrosion von großer Bedeutung ist.

Nach einer weiteren Ausführungsform der Erfindung besteht eine weitere Möglichkeit, die Struktur der Gewebelagen zu beeinflussen darin, daß die Gewebelage feiner Struktur aus miteinander verwobenen Drähten besteht, die im Vergleich zu den Drähten der Gewebelage mittlerer Struktur einen kleineren Querschnitt aufweisen. Entsprechend besteht die Gewebelage grober Struktur aus Drähten, die einen größeren Querschnitt als die Drähte der Gewebelage mittlerer Struktur aufweisen.

Eine besonders vorteilhafte Weiterbildung der Erfindung sieht vor, daß die Drähte aus einer hochtemperaturfesten Legierung bestehen. Durch Verwendung eines derartigen Materials lassen sich Gewebelaminate herstellen, die in vorteilhafter Weise den hohen Temperaturen im Abgasstrom einer APU standhalten können. Als besonders geeignet hat sich eine MCrAIY-Legierung erwiesen. M steht hierbei für die Legierungselemente Ni, Co oder Fe oder für deren Kombinationen. Ebenso sind auch andere Legierungsbestandteile der seltenen Erden an Stelle des Y wie zum Beispiel Hafnium, Cer, Scandium oder Zirkon und deren Kombinationen verwendbar. Neben ihrer guten Hitzebeständigkeit weisen diese Legierungen eine ausreichend hohe Verformbarkeit sowie Schweißeignung auf. Durch eine Verwendung von Gewebelagen unterschiedlicher Werkstoffe lassen sich die thermomechanischen und akustischen Eigenschaften des Gewebelaminates variieren. Denkbar ist auch eine Kombination von Gewebelagen aus metallischen Werkstoffen mit Gewebelagen aus Kunststoff oder Keramik, beispielsweise Feuerfestgeweben, etc., die zum Zwecke einer Verbindbarkeit mit den metallischen Gewebelagen beispielsweise von Metalldrähten durchzogen sein können. Ein auf diese Weise hergestelltes Gewebelaminat zeigt in einem Frequenzbereich von 800 bis 4000 Hz besonders gute akustische Absorptionseigenschaften von bis zu 80 % und für einzelne Töne bis zu 100 %. Damit übertrifft es bisher bekannte Metallfaservliese deutlich.

Nach einer besonders vorteilhaften Ausführungsform der Erfindung sind die Gewebelagen unabhängig von den vorliegenden Gewebestrukturen durch mit in definiertem Abstand und definierter Anzahl angeordneten Schweißpunkten verbunden. Ein weiterer Vorteil der Erfindung besteht darin, daß auf ein vorheriges Flachwalzen der einzelnen Gewebelagen verzichtet werden kann. Ein derartiges Gewebelaminat kann beispielsweise hergestellt werden, indem entsprechend profilierten Schweißelektroden verwendet werden. Diese können beispielsweise mit periodisch angeordneten dornenartigen Fortsätzen versehen sein, die entsprechend dem Abstand und der Anzahl der anzubringenden Schweißpunkte angeordnet sind. Die profilierten Elektroden kontaktieren die miteinander zu verschweißenden Gewebelagen lediglich mit ihren herausragenden Profilbereichen, woraufhin lediglich in diesen Bereichen ein Verschweißen der Gewebelagen miteinander erfolgt. In vorteilhafter Weise wird so ein Gewebelaminat hergestellt, das nicht an sämtlichen Kontaktstellen der Gewebelagen Verbindungen durch Verschweißen aufweist, sondern lediglich an den durch die Geometrie der Schweißelektrode festgelegten Bereichen. Durch geeignete Auswahl der Anzahl und Abstände der Schweißverbindungen kann die Verschiebbarkeit der einzelnen Gewebelagen zueinander mehr oder weniger stark ausgeprägt werden, wodurch die Verformbarkeit des Gewebelaminates quer zu seiner Erstreckungsebene eingestellt und verbessert werden kann. In den zwischen den einzelnen Schweißpunkten vorliegenden Bereichen, in denen die Gewebelagen auch an ihren Kontaktpunkten miteinander nicht verbunden sind, können die Gewebelagen leichte Lageänderungen gegenüber einander durchführen, so daß ein Ausgleich von im Gewebelaminat vorliegenden Biegespannungen bei dessen Verformung erfolgen kann. Die einzelnen Verschweißungen sorgen dabei für einen ausreichend starken Halt der Gewebelagen untereinander, so daß das Gewebelaminat trotz ausgeprägter Verformbarkeit einen sicheren Zusammenhalt der Gewebelagen untereinander gewährleistet.

Das erfindungsgemäße Gewebelaminat eignet sich hervorragend für eine Verwendung als akustische Isolationseinheit. Das Gewebelaminat ist aufgrund seiner guten Verformungseigenschaften zu einer rohrförmigen akustischen Isolationseinheit formbar, die im Rahmen von schalldämpfenden Einheiten für Verbrennungskraftmaschinen und andere rotatorische Systeme wie zum Beispiel Schraubenverdichtern beliebiger Art verwendet werden kann. Das Gewebelaminat ist nach einem besonders vorteilhaften Vorschlag der Erfindung derart gebogen, daß die Gewebelage mit der feinen Struktur den kleinsten Biegeradius erhält. Aufgrund ihres leichten Gewichtes und ihrer Hochtemperaturbeständigkeit ist eine solche akustische Isolationseinheit hervorragend für eine Verwendung als Schalldämpferauskleidung in einem Muffler einer APU eines Luftfahrzeuges, insbesondere eines Flugzeuges, geeignet.

Mit der Erfindung wird des weiteren ein Verfahren zur Herstellung einer akustischen Isolationseinheit mit einem Gewebelaminat vorgeschlagen, welches die folgenden Schritte aufweist:
a) Positionieren von drei übereinander angeordneten Gewebelagen unterschiedlicher Struktur in einem zwischen gegenüberliegenden Elektroden befindlichen Spalt, so daß die Gewebelage feiner Struktur benachbart zu der Gewebelage grober Struktur angeordnet ist und die Gewebelage mittlerer Struktur benachbart zur Gewebelage grober Struktur auf der der Gewebelage feiner Struktur gegenüberliegenden Seite angeordnet ist,
b) Leiten eines elektrischen Stroms durch die Elektroden und in die in dem Spalte befindlichen Bereiche der Gewebelagen, so daß diese durch Widerstandsschweißen wenigstens teilweise miteinander verbunden werden,
c) Biegen der miteinander verschweißten Gewebelagen in die gewünschte Form des akustischen Isolationselementes derart, daß die Gewebelage mit feiner Struktur den kleinsten Biegeradius erhält.

Die im erfindungsgemäßen Verfahren verwendeten Elektroden können beliebiger Form sein. Beispielsweise kann es sich um nach Art eines Pressenstempels aufeinander zubewegte stempelartige Elektroden handeln, deren den zu verschweißenden Gewebelagen zugewandte Seite entsprechend dem Abstand und der Anzahl der durchzuführenden Schweißpunkte profiliert oder für eine Verschweißung der Gewebelaminate an sämtlichen Kontaktstellen eben ausgebildet ist. Die Elektroden können allerdings ebenfalls mit einer Freiformfläche versehen sein, durch die die miteinander zu verschweißenden Gewebelagen schon während des Schweißens in die endgültige Form überführt werden. Vorteilhafterweise entfällt hierdurch ein nachfolgender Formprozeß. Des weiteren können die Elektroden durch rotierende Walzen,beispielsweise aus Kupfer, ausgebildet sein, durch welche die miteinander zu verschweißenden Gewebelagen kontinuierlich gefördert werden. Die Walzen sind - wie auch die zuvor erläuterten Stempelelektroden - unprofiliert oder entsprechend profiliert ausgebildet. Mit Hilfe des erfindungsgemäßen Verfahrens lassen sich erfindungsgemäße Gewebelaminate in vorteilhafter Weise schnell, preiswert und ohne großen Aufwand in nahezu beliebiger Länge und Form oder als Endlosmaterial herstellen. Zur Herstellung von Gewebelaminaten nahezu beliebiger Größe kann im Falle von Stempelelektroden der Schritt b) des Verfahrens beliebig oft wiederholt werden, wobei die Gewebelagen als Endlosmaterial vorliegen und nach dem Verschweißen zwischen den Elektroden stückweise weitergefördert werden, bis sich noch nicht miteinander verschweißte Bereiche der Gewebelagen zwischen den Elektroden befinden. Nach dem Verschweißen kann das Gewebelaminat vorzugsweise automatisch in entsprechenden Abmessungen zugeschnitten und nachfolgend in die für die akustische Isolationseinheit erforderliche Form gebogen werden.

Eine besonders vorteilhafte Form des erfindungsgemäßen Verfahrens sieht vor, daß beim Verschweißen der einzelnen Gewebelagen zwischen den miteinander zu verbindenden Gewebelagen und den Elektroden ein Kupfergewebe angeordnet ist. Dieses Kupfergewebe dient einer besseren Steuerung des Schweißstroms und bewirkt einen definierten Stromübergang von den Elektroden in die Gewebelagen. Durch die Struktur des Kupfergewebes kann der Stromübergang zwischen Elektroden und Gewebelagen auf definierte Bereiche beschränkt werden, so daß es zu der zuvor beschriebenen definierten Ausbildung von Verschweißungen unabhängig von der Struktur der Gewebelagen kommt. Das Kupfergewebe dient lediglich einer Beeinflussung des Stromübergangs und wird nicht mit den Gewebelagen verschweißt.

Weitere Vorteile und Merkmale der vorliegenden Erfindung ergeben sich aus der folgenden beispielhaften Beschreibung bevorzugter und nicht beschränkender Ausführungsbeispiele anhand der Figuren.

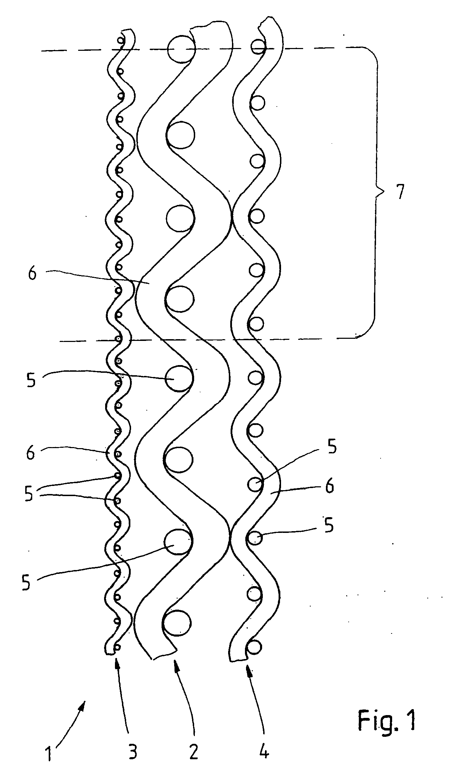

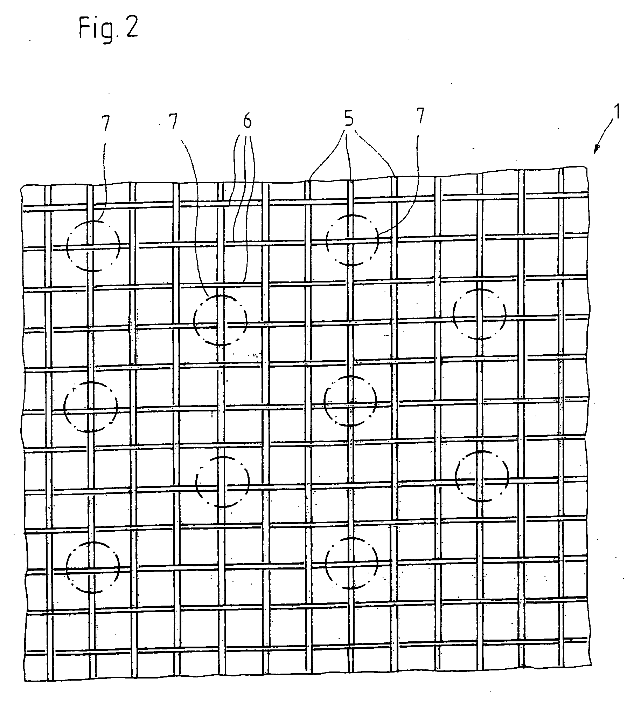

Fig. 1 zeigt einen schematischen Querschnitt durch ein Gewebelaminat 1, während Fig. 2 eine schematische Aufsicht auf das Laminat der Fig. 1 zeigt.

Das Gewebelaminat 1 besteht aus drei einzelnen Gewebelagen. In der Mitte des Gewebelaminates 1 ist eine grobe Gewebelage 2 angeordnet. An der einen Seite der groben Gewebelage 2 ist eine feine Gewebelage 3 angeordnet. An der der feinen Gewebelage 3 gegenüberliegenden Seite der groben Gewebelage 2 ist eine Gewebelage 4 mit mittlerer Struktur angeordnet.

Jede der Gewebelagen 2, 3, 4 besteht aus miteinander verwobenen Kettdrähten 5 und Schußdrähten 6.

Die Kettdrähte 5 und Schußdrähte 6 sind mittels beliebiger Bindungen miteinander verwoben. In Fig. 1 sind sämtliche Gewebelagen als Leinwandbindung ausgebildet.

Die Gewebelagen 2, 3, 4 sind nicht an sämtlichen Kontaktpunkten miteinander verschweißt, sondern lediglich an definierten Schweißbereichen 7, deren Anzahl und Abstand auf die mechanischen Eigenschaften des Gewebelaminates 1 abgestimmt sind.

Fig. 2 zeigt eine Aufsicht auf die feine Gewebelage 3. Deutlich erkennbar sind die miteinander verwobenen Kettdrähte 5 und Schußdrähte 6. Die die einzelnen Gewebelagen 2, 3, 4 miteinander verbindenden Verschweißungen 7 sind in Fig. 2 mittels gestrichelter Kreise angedeutet. Der Abstand, die Anzahl und die Anordnung der Verschweißungen 7 bezüglich einander ist von der Struktur, das heißt der Art und Feinheit des Gewebes der Gewebelagen 2, 3, 4 unabhängig.

Die Gewebelagen 2, 3, 4 werden daher nur im Bereich der Verschweißungen 7 miteinander stofflich verbunden, während sie in den zwischen den Verschweißungen 7 liegenden Bereichen ohne stoffliche Verbindung miteinander lediglich aneinander angrenzen. Die Gewebelagen 2, 3, 4 können sich im Bereich der Verschweißungen 7 relativ zueinander nicht bewegen, während leichte Verschiebungen relativ zueinander in den zwischen den Verschweißungen 7 liegenden Bereichen möglich sind und bei einem Verbiegen des Gewebelaminates 1 auftretende Biegespannungen zwischen den einzelnen Gewebelagen 2, 3, 4 ausgleichen können.

### Bezugszeichenliste

- 1: Gewebelaminat
- 2: grobe Gewebelage
- 3: feine Gewebelage
- 4: mittlere Gewebelage
- 5: Kettdraht
- 6: Schußdraht
- 7: Verschweißung

## Patentansprüche

1. Gewebelaminat (1) als Auskleidung für eine Schallabsorption von Ein- und Auslassschalldämpfern, vorzugsweise in einer Hilfsgasturbine (APU) eines Luftfahrzeugs, insbesondere Flugzeugs, aufweisend wenigstens drei übereinander geschichtete und wenigstens teilweise miteinander verschweißte Gewebelagen (2, 3, 4), von denen eine relativ zu den anderen eine grobe Struktur, eine andere eine feine Struktur und die verbleibende Gewebelage eine Struktur zwischen der groben und der feinen Struktur aufweist, wobei die Gewebelagen (2, 3, 4) miteinander verwobene oder vliesartig verschlungene metallische Drähte (5, 6) aufweisen,
**dadurch gekennzeichnet,**
**dass** die Gewebelage (2) grober Struktur aus Drähten besteht, die einen größeren Querschnitt als die Drähte der Gewebelage (4) mittlerer Struktur aufweisen.

2. Gewebelaminat nach Anspruch 1, **dadurch gekennzeichnet, dass** Drähte (5, 6) der Gewebelagen (2, 3, 4) aus einer hochtemperatur korrosionsbeständigen Legierung bestehen.

3. Gewebelaminat nach Anspruch 2, **dadurch gekennzeichnet, dass** die Legierung der Drähte (5, 6) eine MCrAlY Legierung ist, wobei M die Elemente Nickel, Kobalt und Eisen einzeln oder in Kombination miteinander bezeichnet.

4. Gewebelaminat nach Anspruch 2 oder 3, **dadurch gekennzeichnet, dass** die Legierung an Stelle des Yttriums Legierungszusätze der Elemente Hafnium, Cer, Scandium und Zirkon einzeln oder in Kombination miteinander aufweist.

5. Gewebelaminat nach einem der vorhergehenden Ansprüche, **dadurch gekennzeichnet, dass** Drähte (5, 6) der einzelnen Gewebelagen (2, 3, 4) aus einem korrosionsbeständigen Edelstahl bestehen.

6. Gewebelaminat nach einem der vorhergehenden Ansprüche, **dadurch gekennzeichnet, dass** die Gewebelagen (2, 3, 4) jeweils unterschiedliche Maschengrößen aufweisen.

7. Gewebelaminat nach einem der vorhergehenden Ansprüche, **dadurch gekennzeichnet, dass** wenigstens zwei Gewebelagen (2, 3, 4) unterschiedliche Bindungen aufweisen.

8. Gewebelaminat nach einem der vorhergehenden Ansprüche, **dadurch gekennzeichnet, dass** die Gewebelage (3) feiner Struktur aus Drähten (5, 6) besteht, die einen kleineren Querschnitt als die Drähte (5, 6) der Gewebelage mittlerer Struktur (4) aufweisen.

9. Gewebelaminat nach einem der vorhergehenden Ansprüche, **dadurch gekennzeichnet, dass** die Gewebelagen (2, 3, 4) aus unterschiedlichen Werkstoffen bestehen.

10. Gewebelaminat nach einem der vorhergehenden Ansprüche, **dadurch gekennzeichnet, dass** die äußeren Gewebelagen (3, 4) punktuell mit der mittleren Gewebelagen (2) verschweißt sind.

11. Gewebelaminat nach einem der vorhergehenden Ansprüche, **dadurch gekennzeichnet, dass** die Gewebelagen (2, 3, 4) unabhängig von den vorliegenden Gewebestrukturen durch mit in definiertem Abstand und definierter Anzahl angeordneten Schweißpunkten (7) verbunden sind.

12. Gewebelaminat nach einem der vorhergehenden Ansprüche, **dadurch gekennzeichnet, dass** die Gewebelagen (2, 3, 4) mittels Widerstandsschweißen miteinander verbunden sind.

13. Gewebelaminat nach einem der vorhergehenden Ansprüche, **dadurch gekennzeichnet, dass** die Gewebelagen (2, 3, 4) in der Schichtfolge fein-grob-mittel angeordnet sind.

14. Akustische Isolationseinheit, aufweisend ein Gewebelaminat (1) nach einem der vorhergehenden Ansprüche.

15. Akustische lsolationseinheit nach Anspruch 8 14, **dadurch gekennzeichnet, dass** Gewebelaminat (1) derart gebogen ist, dass die Gewebelage (3) feiner Struktur den kleinsten Biegeradius erhält.

16. Verfahren zur Herstellung einer akustischen Isolationseinheit mit einem Gewebelaminat (2, 3, 4) nach einem der Ansprüche 1 bis 13, **gekennzeichnet durch** die folgenden Schritte:
a) Positionieren von drei übereinander angeordneten Gewebelagen (2, 3, 4) in einem zwischen gegenüberliegenden Elektroden befindlichen Spalt, so dass die Gewebelage (3) feiner Struktur benachbart zu der Gewebelage grober Struktur (2) angeordnet ist und die Gewebelage (4) mittlerer Struktur benachbart zur Gewebelage (2) grober Struktur auf der der Gewebelage (3) feiner Struktur gegenüberliegenden Seite angeordnet ist,
b) Leiten eines elektrischen Stroms **durch** die Elektroden, wobei wenigstens eine Elektrode eine als Freiformfläche ausgebildete Fläche zur Kontaktierung der Gewebelagen (2, 3, 4) aufweist, und in die in dem Spalt befindlichen Bereiche der Gewebelagen (2, 3, 4), so dass diese **durch** Widerstandsschweißen wenigstens teilweise miteinander verbunden werden,
c) Biegen des Gewebelaminates (1) zur gewünschten Form des akustischen Isolationselementes derart, dass die Gewebelage (3) mit feiner Struktur den kleinsten Biegeradius erhält.

17. Verfahren nach Anspruch 16, **dadurch gekennzeichnet, dass** zwischen den zu verbindenden Gewebelagen (2, 3, 4) und den Elektroden ein Kupfergewebe angeordnet wird

18. Verwendung einer akustischen Isolationseinheit nach Anspruch 14 oder 15 in einer Lufteintritts- und/oder Luftaustrittsöffnung einer Hilfsgasturbine (APU) eines Luftfahrzeugs, insbesondere Flugzeugs.

19. Verwendung einer akustischen Isolationseinheit nach Anspruch 14 oder 15 für eine Gasaustrittsöffnung eines Kompressors.

## Claims

1. A mesh laminate (1) as a lining for the sound absorption of inlet and outlet sound suppressors, preferably in an auxiliary gas turbine (APU) of an aircraft, in particular of an aeroplane, having at least three mesh layers (2, 3, 4) layered one above another, and at least partially welded with one another, of which one relative to the others has a coarse structure, another a fine structure and the remaining mesh layer has a structure intermediate between the coarse and fine structures, wherein the mesh layers (2, 3, 4) have metallic wires (5, 6) that are interwoven or interlaced in a non-woven manner with one another,
**characterised in that**
the mesh layer (2) of coarse structure consists of wires that have a larger cross-section than the wires of the mesh layer (4) of medium structure.

2. The mesh laminate in accordance with Claim 1, **characterised in that** wires (5, 6) of the mesh layers (2, 3, 4) consist of a high-temperature corrosion-resistant alloy.

3. The mesh laminate in accordance with Claim 2, **characterised in that** the alloy of the wires (5, 6) is an MCrAlY alloy, wherein M denotes the elements nickel, cobalt and iron, either individually or in combination with one another.

4. The mesh laminate in accordance with Claim 2 or 3, **characterised in that** the alloy, instead of the yttrium, has alloy additives of the elements hafnium, cerium, scandium and zircon, either individually or in combination with one another.

5. The mesh laminate in accordance with one of the preceding claims, **characterised in that** wires (5, 6) of the individual mesh layers (2, 3, 4) consist of a corrosion-resistant stainless steel.

6. The mesh laminate in accordance with one of the preceding claims, **characterised in that** the mesh layers (2, 3, 4) in each case have different mesh sizes.

7. The mesh laminate in accordance with one of the preceding claims, **characterised in that** at least two mesh layers (2, 3, 4) have different forms of weave.

8. The mesh laminate in accordance with one of the preceding claims, **characterised in that** the mesh layer (3) of fine structure consists of wires (5, 6) that have a smaller cross-section than the wires (5, 6) of the mesh layer (4) of medium structure.

9. The mesh laminate in accordance with one of the preceding claims, **characterised in that** the mesh layers (2, 3, 4) consist of different materials.

10. The mesh laminate in accordance with one of the preceding claims, **characterised in that** the outer mesh layers (3, 4) are welded in a point-wise manner to the central mesh layer (2).

11. The mesh laminate in accordance with one of the preceding claims, **characterised in that** the mesh layers (2, 3, 4) independently of the existing mesh structures are connected by means of weld points (7) arranged at defined spacings and in defined numbers.

12. The mesh laminate in accordance with one of the preceding claims, **characterised in that** the mesh layers (2, 3, 4 ) are connected with one another by means of resistance welding.

13. The mesh laminate in accordance with one of the preceding claims, **characterised in that** the mesh layers (2, 3, 4 are arranged in the sequence of fine-coarse-medium 1 yers.

14. An acoustic insulation unit, having a mesh laminate (1) in accordance with one of the preceding claims.

15. The acoustic insulation unit in accordance with Claim 14, **characterised in that** the mesh laminate (1) is curved such that the mesh layer (3) of fine structure has the smallest bending radius.

16. A method for the manufacture of an acoustic insulation unit with a mesh laminate (1) in accordance with one of the Claims 1 to 13, **characterised by** the following steps:
a) positionin of three mesh layers (2, 3, 4) arranged one above another in a gap located between opposing electrodes, such that the mesh layer (3) of fine structure is arranged adjacent to the mesh layer of coarse structure (2), and the mesh layer (4) of medium structure is arranged adjacent to the mesh layer (2) of coarse structure on the opposite side to the mesh layer (3) of fine structure,
b) passing of an electric current through the electrodes wherein at least one electrode has a surface designed as a free-form surface, for purposes of making contact with the mesh layers (2, 3, 4), and into the regions of the mesh layers located in the gap (2, 3, 4), so that these are connected at least partially with one another by means of resistance welding,
c) bending of the mesh laminate (1) to the desired form of the acoustic insulation element such that the mesh layer (3) of fine structure has the smallest bending radius.

17. The method in accordance with Claim 16, **characterised in that** a copper mesh is arranged between the mesh layers (2, 3, 4) that are to be connected, and the electrodes.

18. An application of an acoustic insulation unit in accordance with Claim 14 or 15 in an air inlet and/or air outlet opening of an auxiliary gas turbine (APU) of an aircraft, in particular of an aeroplane.

19. An application of an acoustic insulation unit in accordance with Claim 14 or 15 for a gas outlet opening of a compressor.

## Revendications

1. Stratifié tissé (1) comme revêtement d'absorption acoustique pour des amortisseurs de bruit d'entrée et de sortie, de préférence dans un groupe auxiliaire de puissance (APU) d'un aéronef, en particulier d'un avion, présentant au moins trois couches tissées (2, 3, 4) recouvertes l'une au-dessus de l'autre et soudées au moins partiellement l'une à l'autre, desquelles l'une présente une structure grossière par rapport aux autres, une autre présente une structure fine et la couche tissée restante présente une structure entre la structure grossière et la structure fine, sachant que les couches tissées (2, 3, 4) présentent des fils (5, 6) métalliques tissés entre eux ou enchevêtrés de manière tissée entre eux,
**caractérisé en ce que**
la couche tissée (2) de structure grossière est composée de fils qui présentent une section plus grande que les fils de la couche tissée (4) de structure moyenne.

2. Stratifié tissé selon la revendication 1, **caractérisé en ce que** des fils (5, 6) des couches tissées (2, 3, 4) sont composés d'un alliage résistant à la corrosion à haute température.

3. Stratifié tissé selon la revendication 2, **caractérisé en ce que** l'alliage des fils (5, 6) est un alliage MCrAlY, dans lequel M désigne isolément les éléments nickel, cobalt et fer ou en combinaison les uns avec les autres.

4. Stratifié tissé selon la revendication 2 ou 3, **caractérisé en ce que** l'alliage, à la place de l'yttrium, désigne isolément des ajouts d'alliage des éléments hafnium, cérium, scandium et zircon ou en combinaison les uns avec les autres.

5. Stratifié tissé selon l'une des revendications précédentes, **caractérisé en ce que** des fils (5, 6) des différentes couches tissées (2, 3, 4) sont en acier inox résistant à la corrosion.

6. Stratifié tissé selon l'une des revendications précédentes, **caractérisé en ce que** les couches tissées (2, 3, 4) présentent respectivement des tailles de mailles différentes.

7. Stratifié tissé selon l'une des revendications précédentes, **caractérisé en ce qu'**au moins deux couches tissées (2, 3, 4) présentent des liaisons différentes.

8. Stratifié tissé selon l'une des revendications précédentes, **caractérisé en ce que** la couche tissée (3) de structure fine est composée de fils (5, 6) qui présentent une section transversale plus petite que les fils (5, 6) de la couche tissée (4) de structure moyenne.

9. Stratifié tissé selon l'une des revendications précédentes, **caractérisé en ce que** les couches tissées (2, 3, 4) sont composées de matériaux différents.

10. Stratifié tissé selon l'une des revendications précédentes, **caractérisé en ce que** les couches tissées extérieures (3, 4) sont soudées par point avec la couche tissée centrale (2).

11. Stratifié tissé selon l'une des revendications précédentes, **caractérisé en ce que** les couches tissées (2, 3, 4) sont reliées indépendamment des structures tissées présentes, par des points de soudure (7) disposés avec un écart et un nombre définis.

12. Stratifié tissé selon l'une des revendications précédentes, **caractérisé en ce que** les couches tissées (2, 3, 4) sont reliées entre elles au moyen d'un soudage par résistance.

13. Stratifié tissé selon l'une des revendications précédentes, **caractérisé en ce que** les couches tissées (2, 3, 4) sont disposées dans la suite de couches fin-grossier-moyen.

14. Unité d'isolation acoustique présentant un stratifié tissé (1) selon l'une des revendications précédentes.

15. Unité d'isolation acoustique selon la revendication 14, **caractérisée en ce que** le stratifié tissé (1) est ainsi courbé que la couche tissée (3) de structure fine obtient le rayon de courbure le plus petit.

16. Procédé pour réaliser une unité d'isolation acoustique comprenant un stratifié tissé (1) selon l'une des revendications 1 à 13, **caractérisé par** les étapes suivantes :
a) positionnement de trois couches tissées (2, 3, 4) placées l'une au-dessus de l'autre dans une fente se trouvant entre des électrodes qui se font face, de façon à ce que la couche tissée (3) de structure fine soit adjacente à la couche tissée (2) de structure grossière et que la couche tissée (4) de structure moyenne soit adjacente à la couche tissée (2) de structure grossière sur le côté faisant face à la couche tissée (3) de structure fine,
b) la direction d'un courant électrique à travers les électrodes, sachant qu'au moins une électrode présente une surface formée comme une surface de forme libre pour être en contact avec les couches tissées (2, 3, 4) et dans les espaces des couches tissées (2, 3, 4) se trouvant dans la fente, de façon à ce que celles-ci soient au moins partiellement reliées entre elles par un soudage par résistance,
c) fléchissement du stratifié tissé (1) à la forme souhaitée de l'élément d'isolation acoustique de telle manière que la couche tissée (3) de structure fine obtienne le rayon de courbure le plus petit.

17. Procédé selon la revendication 16, **caractérisé en ce qu'**un tissu de cuivre est placé entre les couches tissées (2, 3, 4) à relier et les électrodes.

18. Utilisation d'une unité d'isolation acoustique selon la revendication 14 ou 15 dans une ouverture d'admission et/ou d'évacuation d'air d'un groupe auxiliaire de puissance (APU) d'un aéronef, en particulier d'un avion.

19. Utilisation d'une unité d'isolation acoustique selon la revendication 14 ou 15 pour une ouverture d'évacuation du gaz d'un compresseur.
